# EUROPÄISCHE PATENTANMELDUNG

(11) **EP 2 165 953 A1**
(43) Veröffentlichungstag der Anmeldung: **24.03.2010**
(21) Anmeldenummer: 08016586.3
(22) Anmeldetag: 19.09.2008
(51) Int. Cl.: B65G 67/06

(54) **Siloanlage mit Mehrfachentnahmestellen**

(71) Anmelder: Claudius Peters Technologies GmbH, 21614 Buxtehude (DE)
(72) Erfinder: Villoldo, Eduardo Heras, 28043 Madrid (ES)
(74) Vertreter: Glawe, Delfs, Moll

(57) **Zusammenfassung**

Die Erfindung betrifft eine Entnahmeanlage für Silos, insbesondere von Schüttgut (99) aus Hochsilos (1), mit einer Entnahmestelle (2), einer Dosiereinrichtung (3) und einer Abgabestelle (4), die als Portal ausgebildet ist. Vorgesehenn ist ein zentral im Silo angeordneter Vertikalförderer aufweist, der zu entnehmendes Schüttgut zur Decke des Silos befördert, sowie eine Verteilerspinne, welche das Schüttgut (99) vom Vertikalförderer (6) nach außen zu an den Seiten (10) angeordneten Fallrohren (8) befördert, die unten jeweils an Abgabestellen (4) angeordnet sind. Dank der Kombination des zentralen Vertikalförderers mit der oben an dem Silo angeordneten Verteilerspinne (7) können mehre Entnahmestellen an der Peripherie angeordnet werden. Damit können gleichzeitig mehrere Fahrzeuge befüllt werden. Außerdem kann die Bauhöhe voll für den Lagerbehälter des Silos verwendet werden.

## Beschreibung

Die Erfindung betrifft eine Entnahmeanlage für Silos, insbesondere von Schüttgut aus Hochsilos, mit einer Entnahmestelle, einer Dosiereinrichtung und einer Abgabestelle, die als Portal ausgebildet ist.

Entnahmeanlagen werden insbesondere für große zylinderförmige oder rechteckige Silobehälter verwendet. Diese Silobehälter weisen in der Regel einen geneigten Bogen und eine zentral angeordnete Entnahmestelle auf. Typischerweise sind sie in einer aufgeständerten Bauweise ausgeführt, so dass ein zum Abtransport des Guts vorgesehener Lastwagen unter die Entnahmestelle fahren kann, die zu diesem Zweck als Portal ausgebildet ist. Es ist bekannt, zur Erreichung einer höheren Verladekapazität mehrere Silobehälter zu Mehrfach-Anlagen zusammenzufassen. Dies bedeutet, es sind mehrere Silobehälter in einem Verbund vorgesehen, die über jeweils eine Entnahmestelle verfügen. Damit kann eine Vervielfachung der Anzahl der gleichzeitig zu beladenden Lastwagen erreicht werden.

Ein Nachteil der vorstehend beschriebenen Lösung besteht darin, dass wegen der zentral angeordneten Entnahmestelle nur jeweils ein Lastwagen je Entnahmestelle befüllt werden kann. Die Durchsatzleistung der Entnahmeanlage in Bezug auf eine möglichst hohe Anzahl an gleichzeitig abzufertigenden Lastwagen wird dadurch beschränkt.

Der Erfindung liegt die Aufgabe zugrunde, eine Entnahmeanlage für Silos der eingangs genannten Art bereitzustellen, mit welcher die vorstehend genannten Nachteile vermindert sind.

Die erfindungsgemäße Lösung liegt in den Merkmalen der unabhängigen Ansprüche. Vorteilhafte Weiterbildungen sind Gegenstand der abhängigen Ansprüche.

Bei einer Entnahmeanlage für Silos, insbesondere von Schüttgut aus Hochsilos mit einer Entnahmestelle, einer Dosiereinrichtung und einer Abgabestelle, die als Portal ausgebildet ist, ist gemäß der Erfindung vorgesehen ein zentral im Silo angeordneter Vertikalförderer, der zu entnehmendes Schüttgut zur Decke des Silos befördert, und eine Verteilerspinne, welche das Schüttgut vom Vertikalförderer nach außen zu an den Seiten angeordneten Fallrohren befördert, an deren unteren Enden jeweils Abgabestellen ausgebildet sind.

Die Erfindung beruht auf einer Kombination gegensätzlich erscheinender Konzepte, nämlich einerseits des Vorsehens eines zentralen Vertikalförderers mit einer an der Decke des Silos angeordneten Verteilerspinne und mehreren an der Peripherie angeordneten Entnahmestellen.

Mit einer solchen Entnahmeanlage werden beträchtliche Veränderungen erreicht. Ein Hauptvorteil der erfindungsgemäßen Lösung besteht darin, dass mehrere Abgabestellen je Silo vorgesehen sein können. Verglichen mit bekannten SiloAnlagen können mehr Lastwagen gleichzeitig befüllt und abgefertigt werden. Damit kann der Durchsatz in Bezug auf gleichzeitig abgefertigte Lastwagen in der gewünschten Weise erhöht werden. Weiter sieht die Erfindung eine seitliche Platzierung der Entnahmestellen vor. Diese Art der Anordnung mag zwar auf den ersten Blick trivial erscheinen, bietet aber den nicht unerheblichen Vorteil, dass kein zusätzlicher Höhenbedarf entsteht, wie er bei der bekannten Entnahmeanlage mit unten am Siloboden angeordneter Entnahmestelle entsteht. Die mögliche Bauhöhe kann also voll für die Größe des Lagerbehälters ausgenutzt werden. Dies stellt häufig einen erheblichen Vorteil dar, wenn die maximale Höhe aufgrund äußerer Faktoren begrenzt ist (wie beispielsweise in Hafenanlagen) oder bei vorhandenen Anlagen möglichst große Silobehälter nachgerüstet werden sollen.

Vorzugsweise ist der Vertikalförderer als eine Vertikalschnecke ausgebildet. Die Ausführung als Schnecke ermöglicht eine besonders raumsparende und effiziente Konstruktion zur Bewirkung einer Vertikalförderung. Verglichen mit anderen Vertikalfördersystemen, wie beispielsweise pneumatische Elevatoren, wird kein Sumpf für die Schnecke benötigt. Sie ermöglicht damit ebenfalls eine sehr höheneffiziente Konstruktionsweise.

Mit Vorteil ist der Boden des Silobehälters als Fluidisierboden ausgebildet, der zu einem Sammelpunkt geneigt ist, an dem das untere Ende der Vertikalschnecke angeordnet ist. Damit lässt sich eine sichere Zuführung zu dem unteren Ende des Vertikalförderers auch bei geringer Neigung des Bodens erreichen. Dies trägt ebenfalls zur besseren Höheneffizienz der Konstruktion bei.

Zweckmäßigerweise ist der Vertikalförderer so ausgebildet, dass die Schnecke nach oben entnehmbar ist. Dies ermöglicht einen guten Zugang zur Schnecke und vereinfacht damit Wartung und gegebenenfalls Reparatur beziehungsweise Austausch.

Die Vertikalspinne ist zweckmäßigerweise mit Luftförderrinnen versehen. Solche Luftförderrinnen, die als solche bekannt sind, eignen sich besonders gut zur Förderung von Schüttgut über eine größere Entfernung, wobei sie nur einen sehr geringen Höhenunterschied benötigen. Sie ergänzen damit die effiziente Förderung in die Vertikale, wie sie insbesondere durch die Vertikalschnecke erreicht wird, durch eine effiziente und sehr höhenraumsparende Verteilung. Aufgrund ihrer Bauweise sind Luftförderrinnen nur wenig anfällig für Verstopfungen und eignen sich besonders gut zur Verteilung auf mehrere verschiedene Abgabestellen.

Die Abgabestellen sind mit Vorteil entlang der Seiten des Silos verteilt angeordnet. Dies gewährleistet einen guten Zugang zu den einzelnen Abgabestellen und ermöglicht außerdem dank des großen Silos beträchtlichen Umfangs, dass eine ganze Anzahl von Abgabestellen mit einem zur An- und Abfahrt von Lastwagen ausreichenden Abstand voneinander angeordnet werden können. In einem einfachen Fall können vier Abgabestellen vorgesehen sein, nämlich eine an jeder Seite bei einem quadratischen oder rechteckigen Silo (entsprechend würde für ein zylinderförmiges Silo eine Anordnung im Winkelabstand von 90° gewählt). Bei größeren Silos können die Abstände winkelmäßig enger gewählt sein, es kommt lediglich darauf an, dass die Abstände so groß gewählt sind, dass sie eine Zu- und Abfahrt der Lastwagen ermöglichen.

Mit Vorteil sind weiterhin Wiegeeinrichtungen seitlich am Silo im Bereich der Abgabestellen angeordnet. Die an die Lastwagen abgegebene Menge kann damit direkt bestimmt werden, und dank der über den Umfang des Silobehälters verteilten Anordnung der Abgabestellen besteht auch ausreichend Raum für die Anordnung der einzelnen Wiegeeinrichtungen. Indem direkt vor Ort an der Abgabestelle verwogen wird, kann die Abfertigung der Lastwagen beschleunigt und damit der Durchsatz insgesamt erhöht werden.

Grundsätzlich kann der Silobehälter wie herkömmlicherweise bekannt aufgeständert ausgeführt sein. Günstiger im Sinne einer guten Höhenausnutzung ist es aber, den Silobehälter ebenerdig anzuordnen. Mit Vorteil ist der Silobehälter eckig ausgeführt. Zwar soll eine runde Ausführung nicht ausgeschlossen sein, jedoch bietet eine eckige Ausführung den Vorteil, dass sie eine günstige Raumausnutzung bei begrenzter Grundstücksgröße ermöglicht, und sich auch besser eignet zur Anreihung, um so Siloanlagen zu bilden.

Die Erfindung bezieht sich weiter auf eine Siloanlage mit einem Großsilo zum Lagern von Schüttgut und einer Entnahmestelle, einer Dosiereinrichtung und einer Abgabestelle, die als Portal ausgebildet ist, wobei ein zentral im Silo angeordneter Vertikalförderer, der zu entnehmendes Schüttgut zur Decke des Silos befördert, und eine Verteilerspinne vorgesehen ist, welche das Schüttgut vom Vertikalförderer nach außen zu an den Seiten angeordneten Fallrohren befördert, an denen unten jeweils Abgabestellen angeordnet sind. Zur näheren Erläuterung wird auf vorstehende Beschreibung verwiesen.

Die Erfindung wird nachfolgend unter Bezugnahme auf die beigefügte Zeichnungen erläutert, in denen ein vorteilhaftes Ausführungsbeispiel dargestellt ist. Es zeigen:
- Fig. 1: eine Seitenansicht einer Siloanlage mit einem Aus-führungsbeispiel einer erfindungsgemäßen Entnahme-anlage;
- Fig. 2: eine vergrößerte Schnittansicht eines Mittelbe-reichs des Silos aus Figur 1;
- Fig. 3: eine Detailansicht des unteren Endes des Vertikal-förderers;
- Fig. 4: eine Detailansicht der Verteilerspinne;
- Fig. 5: eine Teilaufsicht auf einen Boden des Silos; und
- Fig. 6: eine Aufsicht aus einer Siloanlage mit mehreren Si-los.

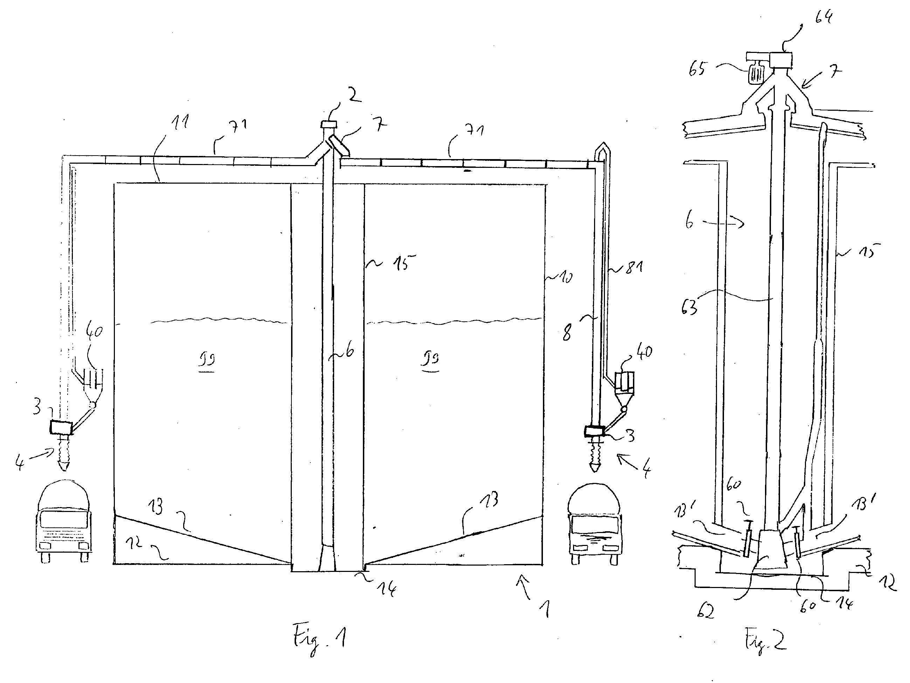

Ein Ausführungsbeispiel für eine Siloanlage mit einer Entnahmeanlage gemäß der vorliegenden Erfindung ist in Figur 1 dargestellt.

Als Hauptkomponenten umfasst die Siloanlage ein als Hochbehälter ausgeführtes Großsilo 1 und eine von einer Entnahmestelle 2, einer Entstaubungseinrichtung 40, einer Dosiereinrichtung 3 und einer Abgabestelle 4 mit einer Entstaubungseinrichtung 40 gebildete Entnahmeanlage. Das Großsilo 1 weist eine im wesentlichen rechteckige Grundform auf. Es ergeben sich damit plane Seitenwände 10, welche oben von einem Deckel 11 des Silos 1 abgedeckt sind. Der Boden ist mehrteilig ausgeführt und weist einen im Wesentlichen ebenen Grundboden 12, der sich auf Höhe des umgebenden Grunds befindet, sowie einen darüber angeordneten, schräg zum Zentrum hin abfallenden Fluidisierboden 13 auf. In dem Zentrum des Silos 1 ist ein Schacht 15 angeordnet, der von dem Boden 12 bis zur Decke 11 eine durchgehende, von dem übrigen mit Schüttgut 99 gefüllten Innenraum des Silos 1 abgetrennte Verbindung schafft. Der Schacht endet an seinem unteren Ende in einem Sumpf 14 des Bodens 12. Im dargestellten Ausführungsbeispiel sind die Abmessungen des Silos 1 so gewählt, dass seine Höhe von etwa 15 m bei einer Kantenlänge des quadratischen Grundrisses von etwa 20 m aufweist. Der Schacht 15 weist vorzugsweise einen quadratischen Querschnitt mit einer Kantenlänge von 5 m auf. Der Sumpf 14 ist gegenüber dem horizontalen Grundboden 12 nur geringfügig mit weniger als 1 m abgesenkt, beispielsweise etwa 80 cm.

An dem Schacht 15 ist eine Entnahmestelle 2 angeordnet. Sie wirkt mit einem Vertikalförderer 6 zusammen, welcher zu entnehmendes Schüttgut aus dem Sumpf 14 aufnimmt und nach oben hin zur Decke 11 des Silos 1 durch den Schacht 15 transportiert. Aufbau und Funktionsweise des Vertikalförderers 6 wird nachfolgend noch näher dargestellt.

Am oberen Ende des Vertikalförderers 6 ist eine Verteilerspinne 7 angeschlossen. Sie ist dazu ausgebildet, das an der Entnahmestelle 2 von dem Vertikalförderer 6 angelieferte Gut auf eine Mehrzahl, insbesondere vier oder mehr, Abgabestellen 4 zu verteilen. Die Verteilerspinne 7 ist so ausgelegt, dass eine möglichst gleichmäßige Verteilung des von dem Vertikalförderer 6 geförderten Guts erreicht wird. An die einzelnen Anschlüsse der Verteilerspinne 7 ist jeweils eine Luftförderrinne 71 angeschlossen. Die Luftförderrinne 71 läuft nahezu horizontal von der Verteilerspinne 7 zu den Seiten des Silos 1, wo sie das Gut an entlang der Seitenwand 10 nach unten führende Fallrohre 8 übergibt. Mit der im wesentlichen horizontalen Anordnung der Luftförderrinne 71 ist gemeint, dass sie nur ein geringfügiges Gefälle von etwa 10% nach außen hin aufweist. Dank des nur geringen Gefälles kann mit der Luftförderrinne 71 auch eine verhältnismäßig große Entfernung bis zur Seitenwand 10 des Silos überbrückt werden, ohne dass dafür ein nennenswerter Höhenbedarf erforderlich wäre.

Die an den Außenseiten der Seitenwände 10 des Silos 1 angeordneten Fallrohre 8 umfassen eine Dosiereinrichtung 3 und an ihrem unteren Ende jeweils eine Abgabestelle 4 mit einer Entstaubungseinrichtung 40. Die Abgabestelle 4 ist dazu ausgebildet, um das Schüttgut 99 in ein Transportfahrzeug, insbesondere einen Lastwagen, zu verladen. In der Regel wird die Abgabestelle 4 wie in Figur 1 dargestellt in einer Portalbauweise ausgeführt sein. Das bedeutet, dass sie zur Beladung des Lastwagens von oben ausgebildet ist. Zur Bestimmung der Menge des verladenen Schüttguts ist die Dosiereinrichtung 3 vorgesehen. Sie ist in an sich bekannter Weise ausgeführt und weist eine Messeinrichtung auf, welche die abgegebene Menge erfassen und gegebenenfalls automatisch bei Erreichen einer bestimmten Sollmenge den Füllvorgang beenden kann.

In Figur 2 ist der Schacht 15 mit dem darin angeordneten Vertikalförderer 6 näher dargestellt. Man erkennt im Bereich des Sumpfes 14 Einlaufenden 13' des Fluidisierbodens 13. Die Einlaufenden 13' sind an ihrem Ende jeweils mittels eines Einlassventils 60 abgeschlossen. Über das Einlassventil 60 wird der Zufluss von Schüttgut 99 in einen Aufnahmekopf 62 des Vertikalförderers 6 geregelt. Der Vertikalförderer 6 weist ein Leitungsrohr 63 auf, in welchem das Schüttgut 99 nach oben transportiert wird. Am oberen Ende des Vertikalförderers 6 ist ein Abgabekopf 64 vorgesehen, an dem die Verteilerspinne 7 angeschlossen ist. An dem Abgabekopf 64 ist in dem dargestellten Ausführungsbeispiel ein Antriebsmotor 65 für den Vertikalförderer angeordnet. Die Anordnung im oberen Bereich bietet den Vorteil guter Zugänglichkeit zu Wartungs- und Reparaturzwecken.

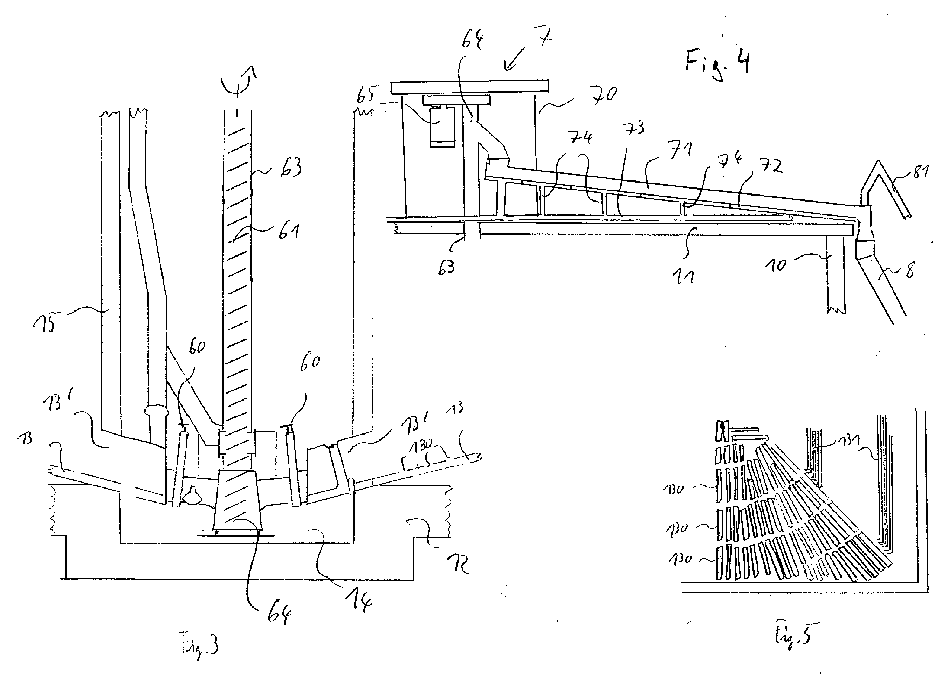

Innerhalb des Rohrs 63 kann das Schüttgut 99 auf verschiedene Weise nach oben transportiert werden. Möglich ist eine pneumatische Förderung mittels eines Gebläses, wobei dann im Bereich des Aufgabekopfes 62 ein Überdruck erzeugt wird. Bevorzugt ist aber eine Förderung mit einer Vertikalschnecke 61 vorgesehen, wie sie in Figur 3 dargestellt ist. In dem Rohr 63 ist die Schnecke 61 konzentrisch angeordnet und wird von dem oben im Bereich des Abgabekopfes 64 angeordneten Antriebsmotor 65 in Drehbewegung versetzt. Die Schnecke 61 reicht mit ihrem unteren Ende in den Bereich des Aufgabekopfes 62 hinein. Das über den Fluidisierboden 13 mit seinen Einlaufenden 13' und die Einlassventile 60 in den Aufgabekopf 62 einströmende Gut wird von der Vertikalschnecke 61 erfasst und nach oben hin zu dem Abgabekopf 64 transportiert. Die Fördergeschwindigkeit ist hierbei durch die vom Antriebsmotor 65 vorgegebene Drehzahl der Schnecke 61 veränderbar.

Die Abführung des Schüttguts 99 über die Luftförderrinne 71 ist in Figur 4 näher dargestellt. Die Luftförderrinnen 71 sind aus mehreren Segmenten gebildet. Unterhalb der Luftförderrinnenen ist eine Fluidisiergaszuführung angeordnet. Sie umfasst eine Fluidisiergasleitung 73, welche von einem Fluidisiergaskompressor (nicht dargestellt) mit Druckluft beaufschlagt wird. Über Fluidisiergaszuführungen 74 wird das Fluidisiergas von der Fluidisiergasleitung 73 einem Bodenbereich 72 der Luftförderrinnen 71 zugeführt. Der Bodenbereich ist dazu ausgebildet, das zugeführte Fluidisiergas über eine Lochplatte, ein Gewebe oder ein anderes viele Luftkanäle aufweisendes Material möglichst fein zu verteilen, um so eine Fluidisierung des Schüttguts im Bereich seiner bodennaher Schicht zu erreichen. Mit dieser Fluidisierung verhält sich das Schüttgut 99 wie ein Fluid, und strömt auch nur bei geringer Neigung in Richtung des Gefälles nach außen. Damit kann auf effiziente Weise auch bei Großsilos 1 mit großer Seitenlänge ein Transport zu den jeweiligen Außenrändern erreicht werden, ohne dass dafür ein großer Höhenunterschied erforderlich wäre. Es sei angemerkt, dass die in der Figur 4 dargestellte Neigung zur Verdeutlichung stark übertrieben ist. Typische Neigungen sind, wie bereits vorstehend angegeben, etwa 10%. Ebenfalls in Figur 4 dargestellt ist ein Schutzgehäuse 70 für die Verteilerspinne 7. Es weist an seiner Seitenwand Durchbrechungen auf, durch welche die Luftförderrinnen 71 radial nach außen geführt sind. Der (nicht dargestellt) Kompressor zur Versorgung der Fluidisiergasleitung 73 mit Fluidisiergas kann vorzugsweise ebenfalls in dem Gehäuse 70 angeordnet sein.

Um ein gutes Zuführen des Schüttguts auch bei geringen Füllständen in dem Silo 1 an den Aufnahmekopf 62 des Vertikalförderers 6 zu erreichen, ist der Boden des Silos vorzugsweise mit dem Fluidisierboden 13 versehen. Sein Aufbau ist in Figur 5 anhand eines Ausschnitts dargestellt. Man erkennt eine Vielzahl von im Wesentlichen radial angeordneten Schlitzen. Unter diesen sind Fluidisierluftleitungen 131 angeordnet, die vorzugsweise mehrgängig parallel zur Seitenwand 10 umlaufend auf dem Boden 12 angeordnet sind. Über diese Leitungen 131 wird Fluidisiergas zugeführt, welches durch die Schlitze 130 des Fluidisiergasbodens 13 strömt und damit das bodennahe Schüttgut 99 fluidisiert. Die Reibungskraft auf den Boden verringert sich, so dass das Schüttgut 99 unter der Wirkung der durch die Schrägung des Fluidisierbodens 13 hervorgerufenen Hangabtriebskraft selbstständig zum Zentrum mit dem Aufnahmekopf 62 gefördert wird.

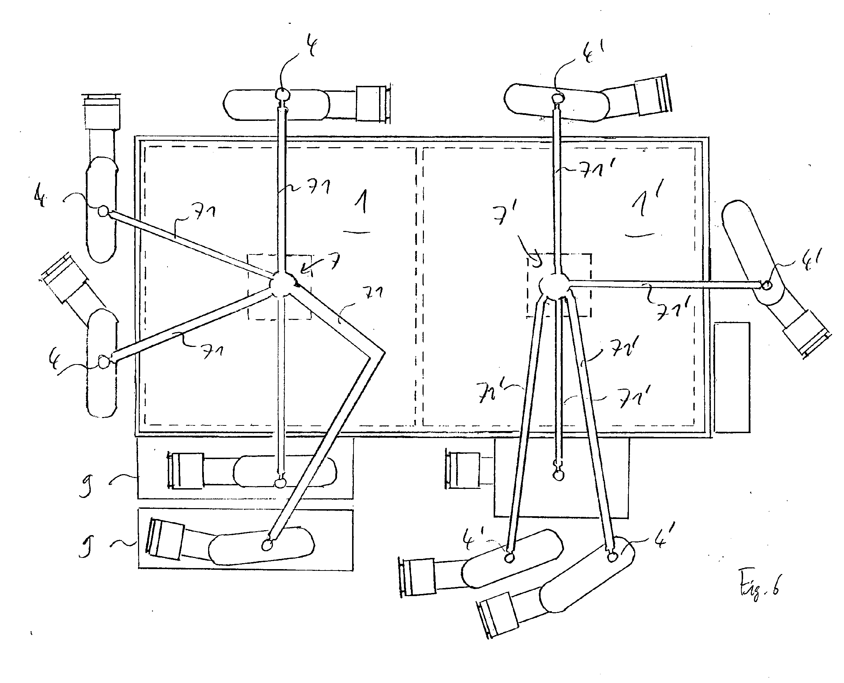

Dank der Verteilerspinne 7 und der mit einer geringen Höhendifferenz auskommenden Luftförderrinne 71 kann eine Vielzahl von Abgabestellen an dem Silo 1 vorgesehen sein. Dank der nur geringen erforderlichen Neigung der Luftförderrinne können diese praktisch beliebig auf der Decke 11 des Silos 1 angeordnet sein. Es können somit auch komplexe Verteilungsmuster realisiert werden, um eine große Anzahl von Abgabestellen 4 zur Beladung von möglichst vielen Lastwagen gleichzeitig vorgesehen sein. Die Großsilos 1 sind vorzugsweise mit einem quadratischen Grundriss ausgebildet, und können somit leicht aneinandergereiht werden. Auf diese Weise kann eine Siloanlage mit zwei, drei oder mehr Großsilos 1, 1' gebildet sein. Ein Beispiel für eine Siloanlage mit zwei Großsilos 1, 1' ist in Figur 6 dargestellt. Sie weisen verschiedene Ausführungen von Verteilerspinnen 7, 7' auf, die jeweils fünf Abgabestellen 4, 4' über eine entsprechende Anzahl Luftförderrinnen 71, 71' versorgen. Man erkennt, dass die Anordnung der Abgabestellen 4, 4' dank der freien Führbarkeit der Luftförderrinnen 71 auf der Decke des Silos 1, 1' praktisch beliebig gewählt sein kann. Damit kann auf einer kleinen Grundfläche eine hohe Anzahl von Abgabestellen zur gleichzeitigen Befüllung vieler Lastwagen vorgesehen sein.

Zur Erhöhung des Durchsatzes bei der Befüllung der Lastwagen sind den Abgabestellen 4, 4' vorzugsweise Wiegeeinrichtungen 9 zugeordnet. Damit können die Lastwagen noch während des Befüllens verwogen werden, ohne dass sie dazu ihre Position zu verlassen brauchen oder dafür gesonderte Zeit aufgewendet werden muss. Nach dem Befüllen können die Lastwagen unmittelbar abfahren, ohne noch eine zentrale Wiegestation anfahren zu müssen. Dank der erfindungsgemäß raumsparenden Bauweise der Großsiloanlage ist die Anordnung solcher einzelnen Wiegeeinrichtungen 9 für jede Abgabestelle 4, 4'auch bei beengten Platzverhältnissen möglich.

## Patentansprüche

1. Entnahmeanlage für Silos, insbesondere von Schüttgut (99) aus Hochsilos (1), mit einer Entnahmestelle (2), einer Dosiereinrichtung (3) und einer Abgabestelle (4), die als Portal ausgebildet ist,
**dadurch gekennzeichnet, dass** ein zentral im Silo (1) angeordneter Vertikalförderer (6), der zu entnehmendes Schüttgut (99) zur Decke (11) des Silos (1) befördert, und eine Verteilerspinne (7) vorgesehen sind, welche das Schüttgut (99) vom Vertikalförderer (6) nach außen zu an den Seiten (10) angeordneten Fallrohren (8) befördert, die unten jeweils an Abgabestellen (4) angeordnet sind.

2. Entnahmeanlage nach Anspruch 1, **dadurch gekennzeichnet, dass** der Vertikalförderer (6) eine Vertikalschnecke (61) aufweist.

3. Entnahmeanlage nach Anspruch 1 oder 2, **dadurch gekennzeichnet, dass** die Vertikalspinne (7) mit Luftförderrinnen (71) versehen ist.

4. Entnahmeanlage nach einem der vorangehenden Ansprüche, **dadurch gekennzeichnet, dass** ein Fluidisierboden (13) für das Silo (1) vorgesehen ist, der zu einem Sammelpunkt am unteren Ende des Vertikalförderers (6) geneigt ist.

5. Entnahmeanlage nach einem der Ansprüche 2 bis 4, **dadurch gekennzeichnet, dass** die Vertikalschnecke (61) nach oben entnehmbar ist.

6. Entnahmeanlage nach einem der vorangehenden Ansprüche, **dadurch gekennzeichnet, dass** mindestens vier über die Seiten (10) des Silos (1) verteilte Abgabestellen (4) vorgesehen sind.

7. Entnahmeanlage nach Anspruch 6, **dadurch gekennzeichnet, dass** Wiegeeinrichtungen (9) seitlich am Silo (1) im Bereich der Abgabestellen (4) angeordnet sind.

8. Siloanlage mit einem Großsilo (1) zum Lagern von Schüttgut (99) und einer Entnahmeanlage mit einer Entnahmestelle (2), einer Dosiereinrichtung (3) und einer Abgabestelle (4), die als Portal (5) ausgebildet ist,
**dadurch gekennzeichnet, dass** ein zentral im Silo (1) angeordneter Vertikalförderer (6), der zu entnehmendes Schüttgut (99) zur Decke (11) des Silos (1) befördert, und eine Verteilerspinne (7) vorgesehen sind, welche das Schüttgut (99) vom Vertikalförderer (6) nach außen zu an den Seiten (10) angeordneten Fallrohren (8) befördert, die unten jeweils an Abgabestellen (4) angeordnet sind.

9. Siloanlage nach Anspruch 10, **dadurch gekennzeichnet, dass** die Entnahmeanlage nach einem der Ansprüche 1 bis 7 weitergebildet ist.

10. Siloanlage nach Anspruch 8 oder 9, **dadurch gekennzeichnet, dass** Silo (1) ebenerdig angeordnet ist.

11. Siloanlage nach einem der Ansprüche 8 bis 10, **dadurch gekennzeichnet, dass** Silo (1) einen eckigen Querschnitt aufweist.

12. Siloanlage nach einem der Ansprüche 8 bis 11, **dadurch gekennzeichnet, dass** mehrere Silos (1) nebeneinander in Reihe angeordnet sind.
